# EUROPÄISCHE PATENTSCHRIFT

(11) **EP 2 347 941 B1**
(45) Veröffentlichungstag und Bekanntmachung des Hinweises auf die Patenterteilung: **19.09.2012**
(21) Anmeldenummer: 10151251.5
(22) Anmeldetag: 20.01.2010
(51) Int. Cl.: B61K 9/10, G01N 29/265, G01N 27/90, G01N 29/04, G01N 29/22

(54) **Messvorrichtung zur Materialprüfung verlegter Schienen im Gleis**
Measuring device for materials testing of rails in the track
Dispositif de mesure destiné au contrôle matériel de rails posés sur la voie

(43) Veröffentlichungstag der Anmeldung: 27.07.2011
(73) Patentinhaber: Vossloh High Speed Grinding GmbH, 21218 Seevetal (DE)
(72) Erfinder: Grüner Lars, 21033 Hamburg (DE)
(74) Vertreter: Raffay & Fleck

(56) Entgegenhaltungen:
- US-A- 4 689 995
- US-A- 5 020 371
- US-A1- 2001 032 513

## Beschreibung

Die vorliegende Erfindung betrifft eine Messvorrichtung zur Materialprüfung verlegter Schienen im Gleis mit einem gezogenen oder selbstangetriebenen, einen Fahrzeugrahmen und Schienenlaufräder aufweisenden Fahrzeug und einer Prüfkopfanordnung mit wenigstens je einem entlang der jeweiligen Schiene zu führenden Prüfkopf für jede der beiden in dem Gleis verlegten Schienen, wobei die Schienenlaufräder des Fahrzeuges einen festen Spurabstand aufweisen, wobei an dem Fahrzeugrahmen eine Halte- und Führungseinrichtung für die Prüfkopfanordnung festgelegt ist, die quer zu der Fahrtrichtung des Fahrzeuges relativ zu dem Fahrzeugrahmen bewegbar ist, wobei die Halte- und Führungseinrichtung einen ersten und einen zweiten Halte- und Führungsabschnitt aufweist, die mittels einer Spreizeinrichtung quer zu der Fahrtrichtung des Fahrzeuges mit einer Spreizkraft beaufschlagt sind und jeweils wenigstens einen Prüfkopf tragen, den sie entlang jeweils einer der beiden Schienen in dem Gleis führen.

Es ist bekannt, verlegte Schienen durch Befahren mit Messzügen im Gleis hinsichtlich etwaiger Materialfehler oder -ermüdungen zu prüfen. In solchen Prüfzügen zur Messung der Schienen mittels Ultraschall oder Wirbelstrom werden verschiedene Prüfköpfe entlang der Schiene geführt. Sie berühren dabei die Schienenoberfläche (Ultraschall) oder müssen sehr dicht und mit sehr konstantem Abstand über der Oberfläche positioniert sein (Wirbelstrom).

Beim Wirbelstrom-Prüfverfahren (auch als "Eddy-Current-Testing" bezeichnet und als ET abgekürzt) reagiert die Sonde nicht nur auf Risse in der Schienenoberfläche und auf Materialänderungen in der Schiene (z. B. auf Aufhärtungen), sondern auch auf variierende Abstände des Messkopfes bzw. der Sonde zum Gleis. Dabei ist das Signal eines versehentlichen Abhebens der Sonde um nur wenige Zehntelmillimeter nicht zu unterscheiden vom Signal einer Aufhärtung. Solche Aufhärtungen zu detektieren, ist aber - zumindest auch - Zweck der Prüfung. Außerdem wird die Risstiefenbestimmung durch variierende Abstände zwischen Schiene und Sonde hinsichtlich ihrer Genauigkeit nachteilig beeinträchtigt. Deshalb muss die Sonde sehr präzise über die Schiene geführt werden.

Aufgrund des Spurspiels zwischen Gleis und Rädern der Prüfzüge sowie unterschiedlicher Spurbreite des Gleises (innerhalb zulässiger Toleranzen) von bis zu 4 cm "schwimmt" ein Schienenfahrzeug jedoch im Gleis, das heißt die seitliche Positionierung von Fahrzeug und Schiene unterliegt während der Fahrt einer ständigen Schwankung in der Größenordnung von +/- 2 cm (in einer Art Sinuslauf). Um die Prüfköpfe präzise in vertikaler und lateraler Richtung zu führen, ist das übliche, in der Spurweite starre Schienenfahrwerk eines Prüfzugs nicht geeignet.

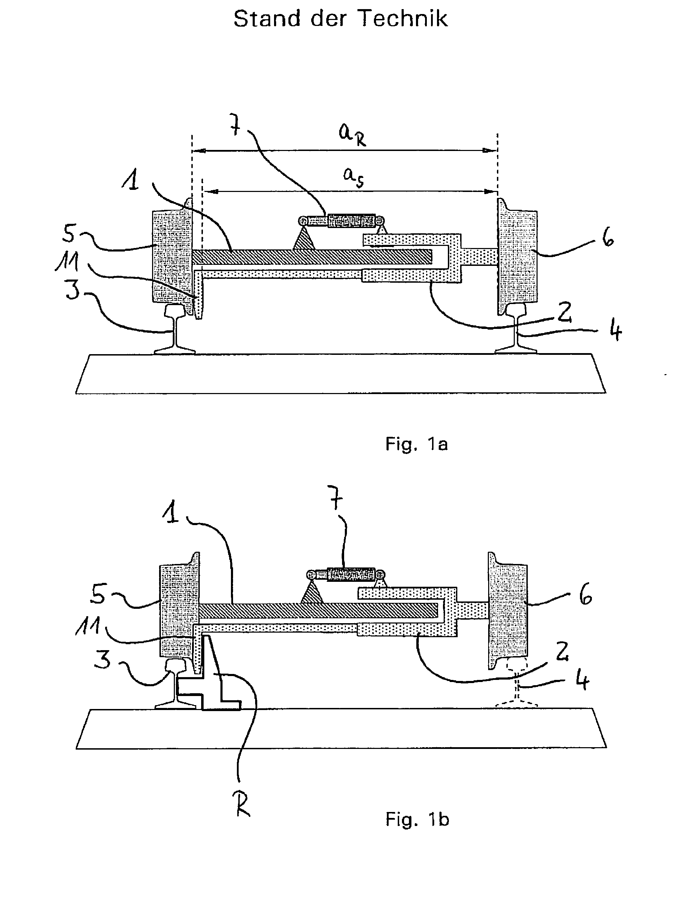

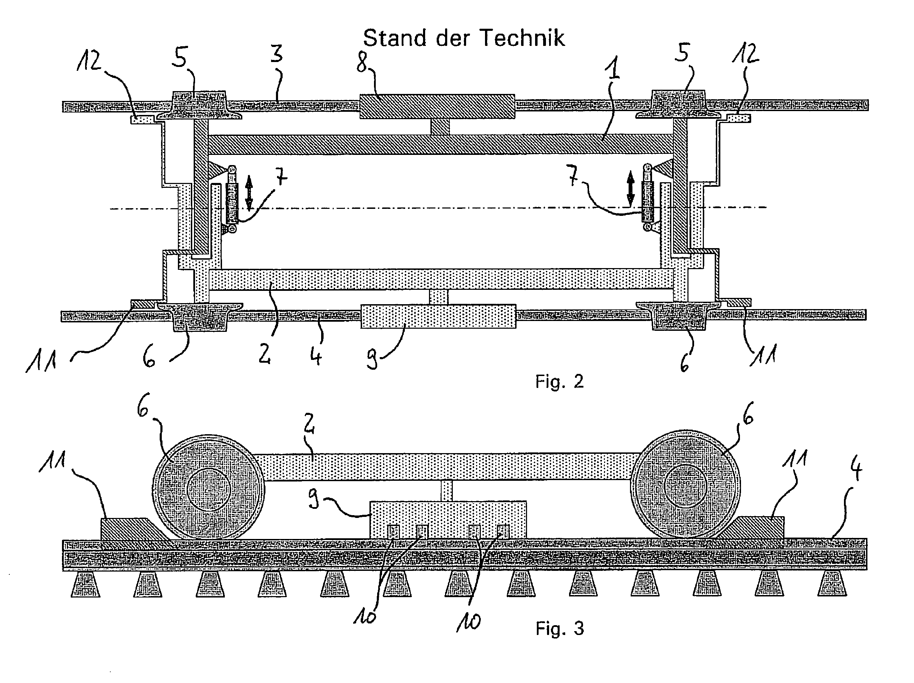

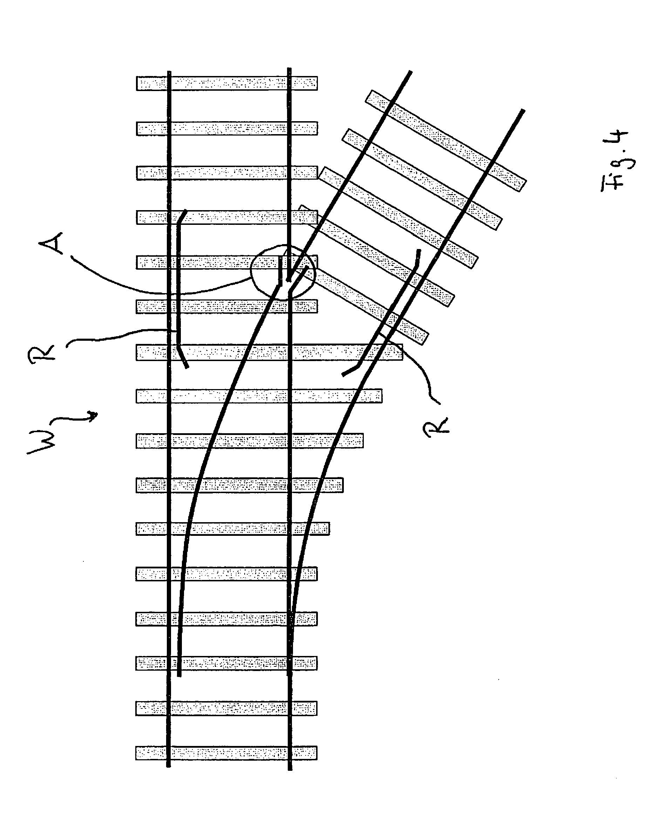

Deshalb verwenden alle Prüfzüge einen zusätzlichen Messwagen, der sein Fahrwerk elastisch spreizt und so der Schiene folgt. Die Prüfköpfe sind auf jeder Seite dieses Fahrwerks so montiert, dass sie zusammen mit den beiden seitlich angepressten Messwagenrädern dieser Seite an der Schiene entlang geführt werden. Eine schematische Darstellung dieser bekannten Bauweise ist in den Figuren 1 bis 4 dargestellt, die auf deutlich als "Stand der Technik" gekennzeichneten Blättern angeordnet sind. In Figur 4 ist zur Verdeutlichung eine Weiche dargestellt.

Der bekannte Messwagen verfügt über ein zweigeteiltes Fahrgestell mit zwei Fahrgestellteilen 1 und 2, die quer zu der Fahrtrichtung relativ zueinander verschiebbar sind. An beiden Fahrgestellteilen 1, 2 sind die jeweils einer der Schienen 3 bzw. 4 des Gleises zugeordneten Räder 5 bzw. 6 angelagert. Über Aktuatoren 7 werden die beiden Fahrgestellteile 1 und 2 gespreizt, so dass die Räder 5 und 6 eng an den Schienen 3 bzw. 4 laufen. Etwaige Toleranzen im Schienenabstand werden durch die Aktuatoren 7 und die Relativbewegung der Fahrgestellteile 1 und 2 quer zu der Fahrtrichtung abgepuffert.

An jedem der Fahrgestellteile ist ein Prüfkopfhalter 8 bzw. 9 mit einem oder mehreren daran aufgehängten Prüfköpfen 10 angeordnet, der je nach Art der Prüfköpfe 10 (Ultraschall oder Wirbelstrom) in Kontakt oder in nahem Abstand entlang der zugehörigen Schiene 3 bzw. 5 geführt wird. Durch den sicheren seitlichen Andruck der Räder 5 bzw. 6 an die jeweilige Schiene und die damit zusammenhängenden definierte Lage des zugehörigen Fahrgestellteils 1 bzw. 2 zu der Schiene ergibt sich eine weitgehend genaue Positionierung der Prüfkopfhalter 8, 9 und damit letztlich der Prüfköpfe 10 relativ zu der zu vermessenden Schiene.

Da bei dem gespreizten Fahrwerk des Messwagens der Radabstand a_{R} nicht konstant ist, sondern vielmehr variiert und bei zunehmendem Schienenabstand ebenfalls wächst, besteht beim Durchfahren einer Weiche W, wie sie in Fig. 4 gezeigt ist, die Gefahr, dass dort das innen laufende Rad im Herzstück der Weiche W im führungslosen Abschnitt A in die falsche Schiene läuft, der Wagen so entgleist. Um dies zu verhindern, sind an den Fahrgestellteilen sogenannte Führungsschwerter 11 bzw. 12 angeordnet und mit diesen starr verbunden. Die Führungsschwerter 11, 12 eines Fahrgestellteils 1, 2 ragen über einen festen Abstand, den üblichen Radrückenabstand a_{R} der Spur, bis in den Bereich des an dem jeweils anderen Fahrgestellteil 2, 1 angeordneten Rades 6, 5. Beim Durchfahren einer Weiche W hintergreifen sie den dort angeordneten Radlenker R und ziehen so ihr Fahrgestellteil 2 (vergleiche Figur 1b) in Richtung des Fahrgestellteiles 1, das mit seinem Rad 5 den Bereich des Radienkers R durchläuft. Auf diese Weise wird das Fahrgestell des Messwagens bei einer Weichendurchfahrt auch im Herzstück und beim Passieren des Abschnittes A ohne kontinuierliche Führung zusammengehalten. Ein Überspreizen und damit ein Entgleisen des Wagens wird verhindert. Zur Vereinfachung sind in den Figuren 1 bis 4 ein erstes Fahrgestellteil 1 und (mit Ausnahme der Räder 5) alle daran fest angeordneten Teile gestrichelt, das zweite Fahrgestellteil 2 mit den daran fest angeordneten Teilen (mit Ausnahme der Räder 6) gepunktet dargestellt.

Bei dieser bekannten Lösung ergeben sich folgende Schwierigkeiten:
1. Durch das Spreizen und zwangsweise Anlaufen der Spurkränze der Räder 5, 6 des Messwagens ist der Verschleiß an diesen Rädern 5, 6 sehr hoch.
2. Durch das seitliche Anpressen der Räder 5, 6 und die Reibung der Spurkränze an der jeweiligen Schienenkopfflanke erhält der Wagen eine Tendenz zum Aufklettern und Entgleisen. Dies kann nur durch großes Gewicht des Wagens (typischerweise liegt dieses im Bereich mehrerer Tonnen) oder durch eine zusätzliche Anpressung durch ein zugeordnetes Mutterfahrzeug mit den damit verbundenen konstruktiven und kostenmäßigen Mehraufwendungen kompensiert werden.
3. Der Messwagen ist eine vergleichsweise große und damit träge Masse und der Spreizmechanismus ist reibungsbehaftet, so dass das Fahrwerk auf Änderungen in der Gleisspurweite mit endlicher Reaktionszeit antwortet, d. h. für kurze Zeit können die Spurkränze der Räder 5, 6 von der Fahrkante der Schienen 3, 4 ablaufen, so dass die Prüfköpfe 10 nicht im richtigen Abstand laufen und es zu den oben beschriebenen Messfehlern und -ungenauigkeiten kommt.
4. Beim Durchfahren einer Weiche W dürfen, wie oben erwähnt, die gespreizten Räder 5, 6 nicht durch die führungslose Stelle (Abschnitt A) in den abzweigenden Strang fahren. Dies wird bei allen Rädern 5, 6 des Messwagens gemäß obiger Beschreibung durch die Führungsschwerter 11, 12 (auch Spurführungsschwerter genannt) sichergestellt. Jedes Rad 5, 6 hat sich gegenüber das über ein Gestänge im starren Radrückenabstand a_{R} verbundene Führungsschwert 11, 12, welches bei Weichendurchfahrt sich am Radlenker R der Weiche W abstützt und das Rad 5, 6 von der führungslosen Stelle fernhält.
   Diese Lösung unterliegt folgende Anforderungen: Um den (mit einem Gewicht im Bereich von Tonnen schweren) Messwagen auch bei hoher Fahrgeschwindigkeit sicher führen zu können, müssen diese Schwerter 11, 12 und ihr Gestänge sehr robust ausgeführt sein. Weil die Spurführungsschwerter 11, 12 durch den nur etwa 34 mm schmalen Spalt zwischen Schiene 3, 4 und Radlenker R passen müssen, ist das Führungsschwert 11, 12 als solider Klotz ausgeführt, der - Stahl auf Stahl - am Radlenker R entlang gleitet und dadurch starkem Verschleiß ausgesetzt ist. Eine Rollenführung mit hinreichender Stoßfestigkeit ist auf dem beschränken Platz nicht unterzubringen. Gleichzeitig muss der Mechanismus möglichst spiel- und reibungsfrei laufen, um den Spreizvorgang des Fahrwerks nicht zu beeinträchtigen. Hierdurch ist der bauliche Aufwand vergleichsweise hoch.
5. Ein spurgeführter Messwagen ist wegen der erforderlichen zusätzlichen Anpressung ans Gleis gebunden an einen speziellen Prüfzug, der wiederum eine Spezialanfertigung ist, die nicht nur in der Herstellung, sondern auch im Hinblick auf die Betriebszulassung als Fahrzeug mit erheblichen Kosten verbunden ist. Dieses Spezialfahrzeug kann wegen des für die Messanwendung individualisierten Baus nur für diesen Zweck zum Einsatz kommen und steht für andere Zwecke nicht zur Verfügung. Da die Messfahrten nur in größeren Intervallen zu unternehmen sind, bedeutet dies eine sehr hohe Bindung von Kapital mit einem vergleichsweise geringen Nutzen.

In den vorveröffentlichten Dokumenten US 4,689,995; US 5,020,371 und US 2001/0032513 A1 zeigen jeweils Messvorrichtungen zum Messen von verlegten Schienen, bei denen ein Prüfkopf entsprechend von Messsignalen eines Sensors über einen von einer Steuerung, die die Messsignale auswertet angesteuerten Aktuator in seiner Position zur Schiene nachgeführt wird. Dies ist kompliziert und erfordert einen hohen apparativen Aufwand.

Eine Alternative zu einem großen selbst angetriebenen Prüfzug mit spurgeführtem Messwagen ist das Konzept eines autonomen Messtrolleys, bei dem die gesamt Prüfeinrichtung auf dem Trolley angebracht ist, der dann von einem universellen Fahrzeug (z.B. einem schienentauglichen Lastkraftwagen, einer Rangierlok, einem Gleiskraftwagen) bewegt wird. Um den Messwagen leicht und gut handhabbar (insbesondere beim Aufgleisen) zu machen und gleichzeitig sichere Laufeigenschaften zu gewährleisten, sollte das Fahrwerk des Messwagens nicht gespreizt werden und die Führung der Prüfköpfe auf andere Weise erfolgen.

Hier setzt die Erfindung an, mit der eine verbesserte Messvorrichtung zur Materialprüfung verlegter Schienen im Gleis angegeben werden soll, die die oben genannten Nachteile überwindet.

Erfindungsgemäß wird diese Aufgabe gelöst durch eine Messvorrichtung zur Materialprüfung verlegter Schienen im Gleis mit den Merkmalen des Patentanspruchs 1. Vorteilhafte Weiterbildungen sind in den abhängigen Ansprüchen 2 bis 10 angegeben und in ihren Merkmalen bezeichnet.

Erfindungsgemäß ist also das gezogene oder selbst angetriebene Fahrzeug, an welchem die Prüfkopfanordnung festgelegt ist, ein solches mit festem Spurabstand der Schienenlaufräder. An dem Fahrzeugrahmen ist eine Halte- und Führungseinrichtung für die Prüfkopfanordnung festgelegt. Anstelle etwa den gesamten Fahrzeugrahmen des Fahrzeuges zu spreizen, ist hier nur die Halte- und Führungseinrichtung für die Prüfkopfanordnung quer zu der Fahrtrichtung des Fahrzeuges relativ zu dem Fahrzeugrahmen bewegbar, und die Halte- und Führungseinrichtung weist zwei Abschnitte auf. Diese beiden Halte- und Führungsabschnitte sind mittels einer Spreizeinrichtung quer zu der Fahrtrichtung des Fahrzeuges mit einer Spreizkraft beaufschlagt und tragen jeweils wenigstens einen Prüfkopf, den sie entlang jeweils einer der beiden Schienen in dem Gleis führen.

Der Hauptgedanke der Erfindung liegt somit in einem verbesserten Führungsmechanismus für die Prüfkopfhalter, bei dem nicht ein schwerer als Spezialanfertigung herzustellender und damit kostspieliger Messwagen gespreizt und geführt wird, der dann seinerseits die kleinen und leichten Prüfkopfhalter führt, sondern statt dessen nur ein Gestell mit einem Paar Prüfkopfhaltern gespreizt und geführt wird. Dies hat insbesondere zum Vorteil, dass
1. der Messwagen ein übliches, starres Fahrwerk haben kann, das einfach ausgeführt werden kann und trotz kleiner Masse sichere Laufeigenschaften aufweist.
2. die zu spreizenden und zu führenden Massen ungleich geringer sind, das System dadurch weniger träge ist. Hierdurch und durch die Tatsache, dass die Spreizkraft direkt auf den Prüfkopfträger aufgebracht und nicht über Umwege und Strukturen von endlicher Steifigkeit geleitet wird, ist die Präzision der Führung deutlich höher. Dies kommt unmittelbar der Qualität der Messergebnisse zugute.
3. der bauliche Aufwand deutlich geringer, der Bauraum wesentlich kompakter, die Masse entscheidend verringert (ca. Faktor 10) ist.
4. die seitliche Spreizkraft geringer und daraus resultierend auch der Verschleiß der Führung geringer sein kann, da weniger Masse gespreizt werden muss.
5. wegen der geringen zu spreizenden Masse und der dadurch geringen Spreizkraft das Führungsschwert - statt gleitend - mit verschleißarmen Rollen ausgeführt werden kann.

Für eine verbesserte und reibungs- wie verschleißarme Führung der Halte- und Führungseinrichtung mit den daran angeordneten Prüfkopfhaltern oder Prüfköpfen entlang der jeweiligen Schiene sind erfindungsgemäß an den Halte- und Führungsabschnitten Führungsrollen angeordnet, die im Betrieb an der Schiene entlang rollen, entlang derer der Prüfkopf im Betrieb zu führen ist.

Dabei ist es grundsätzlich egal, ob die Prüfköpfe Ultraschallprüfköpfe sind (vgl. Anspruch 8), die dann in der im Stand der Technik bekannten Weise unter Ausbildung eines Wasserfilmes oder eines Filmes aus einer anderen die Reibung reduzierenden und für Ultraschall transparenten Flüssigkeit in untermittelbarem Kontakt über die Schienen geführt werden, oder aber Wirbelstromprüfköpfe (vgl. Anspruch 9) sind, die unter Einhaltung eines vorgegebenen, im Wesentlichen konstanten Abstandes oberhalb der zu untersuchenden Schienenoberfläche geführt werden.

Ähnlich wie bei den aus dem Stand der Technik bekannten mit einem gespreiztem Fahrwerk versehenen Messwagen muss auch bei der erfindungsgemäßen Messvorrichtung, wenn diese auch für das Überfahren von Weichen oder Kreuzungsabschnitten Verwendung finden soll, eine entsprechende Vorkehrung getroffen werden, die ein Überspreizen - hier jedoch nur der vergleichsweise leichten Halte- und Führungseinrichtung - verhindert, damit diese bei Weichendurchfahrt oder Überfahren eines Kreuzungsbereiches keinen Schaden nimmt oder aus dem Gleis springt. Eine solche Lösung kann erfindungsgemäß durch Vorsehen der Merkmale des Anspruches 2 umgesetzt werden. Ähnlich wie im Stand der Technik für die gesamte Fahrwerkshälfte wird an der Halte- und Führungseinrichtung an jedem der Halte- und Führungsabschnitte (einem in dem Gleis links angeordneten, einen rechts angeordneten) jeweils wenigstens ein Führungsschwert festgelegt, welches in den der Halte- und Führungseinrichtung gegenüberliegenden Schienenbereich ragt und bei Weichendurchfahrt den Radlenker hintergreift. Ähnliches gilt auch für Kreuzungsbereiche. Durch diese Maßnahme wird bei einer Weichendurchfahrt in dem Bereich, in dem im Herzstück der Weiche der innen liegende Schienenstrang offen ist, ein Herauslaufen und Überlaufen des an diesem Schienenstrang entlang geführten Prüfkopfhalters an dem zugeordneten Halte- und Führungsabschnitt durch ein Überspreizen der Halte- und Führungseinrichtung verhindert. Dadurch, dass die Gesamtmasse der zu spreizenden und damit im Weichenbereich zurückzuhaltenden Bauteile um ein Vielfaches geringer ist als die Masse der im Stand der Technik verwendeten Messwagen, kann ein solches Führungsschwert deutlich weniger massiv ausgelegt werden, was es erlaubt, an den Führungsschwertern in dem Bereich, in welchem sie in einer Weiche an dem Radlenker angreifen, Rollen zum Abrollen auf dem Radlenker anzubringen (vgl. Anspruch 3).

Ein besonderer Vorteil der erfindungsgemäßen Messvorrichtung besteht darin, dass die Halte- und Führungseinrichtung nicht an einem mit einem spreizbaren Spezialfahrwerk versehenen Messfahrzeug angeordnet werden muss, sondern an einem Fahrzeug mit herkömmlichen starren Fahrzeugrahmen montiert werden kann. Dies gibt die Möglichkeit, die Halte- und Führungseinrichtung an verschiedenen Fahrzeugplattformen festzulegen, z.B. einen reinen Schienenfahrzeug, einem Zweiwegefahrzeug (für Straße und Schien) oder sogar integriert in ein Schienenbearbeitungsfahrzeug, z.B. ein Schienenschleiffahrzeug oder einer Schienenfräse, wo mit der erfindungsgemäßen Messvorrichtung sogleich und in situ das Ergebnis einer zuvor erfolgten Schienenbearbeitung messtechnisch überprüft werden kann. So kann z.B. bei einem noch vorhandenen Schienenfehler eine Nachbearbeitung unmittelbar vorgenommen werden, indem z.B. das Schienenschleiffahrzeug bzw. der Schienhobel die noch immer schadhafte Stelle sogleich noch einmal bearbeitend überfährt. Der erwähnte Einsatz eines Zweiwegefahrzeuges mit der Messvorrichtung hat den Vorteil, dass ein solches beispielsweise im Straßentransport die Halte- und Führungseinrichtung zu einem Einsatzort transportieren und an dem Einsatzort in das Gleis einfahren kann, wo dann die Halte- und Führungseinrichtung durch Absenken in das Gleis eingesetzt wird. Entlang der Schienen kann dieses Fahrzeug nun einen Messeinsatz fahren über eine zu vermessende Gleisstrecke, bis es an einem Endpunkt die Halte- und Führungseinrichtung anhebt (vom Gleis abhebt) und über den Straßentransport zurück zu einem Lagerort fahren kann.

Die Halte- und Führungseinrichtung mit der daran angeordneten Prüfkopfanordnung weist bevorzugt ein Gewicht von maximal 50 kg auf. Ein Messwagen mit dieser Halte- und Führungseinrichtung kann damit ebenfalls sehr leicht gebaut werden. Dies bringt nicht nur den Vorteil einer einfachen Verlegbarkeit dieser Einrichtung hin zu einem Einsatzort, sondern ermöglicht auch, dass diese z.B. mit einfachen bordeigenen Kränen von Zweiwegefahrzeugen bewegt werden kann. Bekannte Schienenmessvorrichtungen und -fahrzeuge bzw. -züge sind nicht nur als Spezialfahrzeuge ausgeführt, sondern weisen ein deutlich höheres Gewicht als die Halte- und Führungseinrichtung auf, allein der Messwagen üblicher derartiger Vorrichtungen bringt es auf ein Gewicht von 4 Tonnen oder mehr. Derart schwere Geräte können entweder nur über einen Schienentransport zu einem Einsatzbereich verbracht werden, verursachen dann jedoch hohe Trassengebühren. Oder es sind bei Verlegung über Straßentransport häufig Schwerlasttransporte erforderlich, und es müssen besondere Vorrichtungen zum Bewegen der schweren Gerätschaften vorgesehen werden, z.B. Spezialkräne. Dies alles erhöht den Aufwand eines Messeinsatzes erheblich, bzw. dieser Aufwand kann mit der Erfindung um ein vielfaches reduziert werden, es sind flexible und schnell auszuführende Messeinsätze möglich.

Da die erfindungsgemäße Messvorrichtung eine gegenüber bekannten Messwagen deutlich leichtere Halte- und Führungseinrichtung aufweist, ist beim Durchfahren eines Gleises die Neigung zum Aufklettern und Entgleisen entsprechend geringer. Um einer solchen Neigung jedoch noch klarer entgegenzuwirken, kann, wie in einer Weiterbildung gemäß Anspruch 5 vorgesehen, wenigstens ein zwischen dem Fahrzeugrahmen und der Halte- und Führungseinrichtung angeordneter Aktuator vorgesehen sein, der eine Andruckkraft auf die Halte- und Führungseinrichtung in Richtung des Gleises ausübt. Dieser Aktuator kann gleichzeitig auch zum Anheben und Absenken der Halte- und Führungseinrichtung mit der Prüfkopfanordnung dienen.

Die Spreizeinrichtung zum Spreizen der Halte- und Führungseinrichtung, also zum Auseinanderdrücken der beiden diese bildenden Halte- und Führungsabschnitte kann gemäß einer vorteilhaften Weiterbildung (vgl. Anspruch 6) wenigstens jeweils einen zwischen dem Fahrzeugrahmen und dem ersten bzw. dem zweiten Halte- und Führungsabschnitt angeordneten Aktuator aufweisen, die jeweils eine auf die Schiene, entlang derer die Prüfköpfe des jeweiligen Halte- und Führungsabschnittes geführt werden, hin gerichtete Kraft auf den zugeordneten Halte - und Führungsabschnitt ausübt. Mit anderen Worten stützt sich der die Spreizkraft aufbringende Aktuator an dem starren Fahrzeugrahmen ab und drückt jeweils nur einen, nämlich seinen ihm zugeordneten Halte- und Führungsabschnitt in Richtung der zugeordneten Schiene.

Natürlich ist es alternativ auch denkbar, einen Aktuator unmittelbar zwischen die beiden Halte- und Führungsabschnitte anzuordnen, der diese auseinander drückt. Es muss dann lediglich eine schwimmende Befestigung der Gesamtanordnung der Halte- und Führungseinrichtung mit dem Fahrzeugrahmen geschaffen werden.

Um eine Auswertung der Messergebnisse bereits während der Messung vornehmen zu können, kann die erfindungsgemäße Messvorrichtung eine Auswerteelektronik enthalten, mit der die Prüfköpfe über Signalleitungen verbunden sind und die zum Auswerten der Messsignale der Prüfköpfe eingerichtet ist. Eine solche Auswertung kann dabei eine Vorauswertung sein, aber auch eine Auswertung insgesamt mit Erstellung eines Fehlerprotokolls. Selbstverständlich kann dabei mit besonderem Vorteil ein Speicher vorgesehen sein, der die Messergebnisse und auch die zugehörigen Auswertungen während der Messfahrt speichert und dem jeweiligen Messort zuordnet. Alternativ kann anstelle einer Auswertung auch lediglich die Speicherung der Messergebnisse vorgenommen werden korreliert mit dem Messort, so dass eine Auswertung nach Beendigung der Messfahrt von entsprechend geschultem technischen Personal oder automatisiert zentral vorgenommen werden kann.

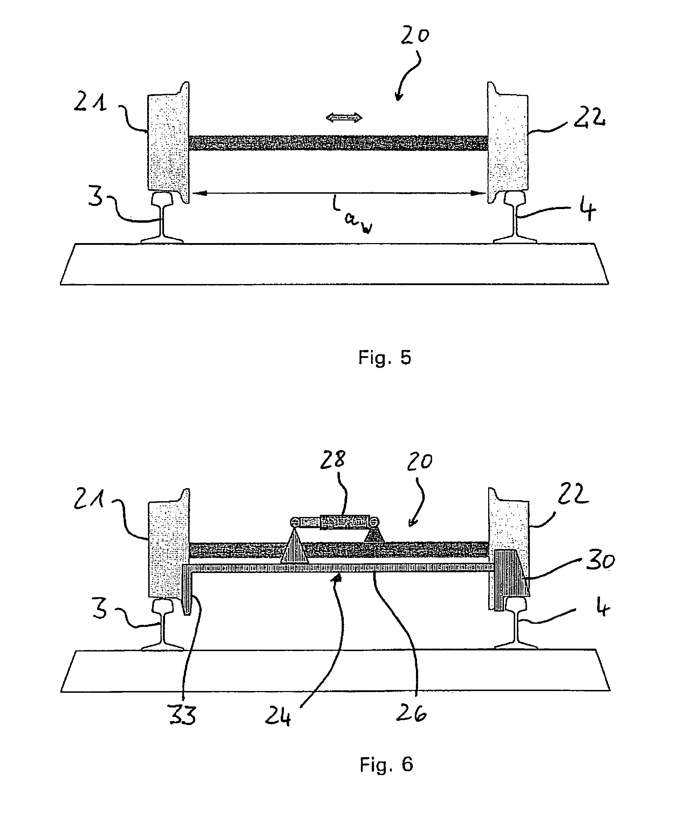

Weitere Vorteile und Merkmale der Erfindung ergeben sich aus der nachfolgenden Beschreibung eines Ausführungsbeispiels anhand der Figuren 5 bis 9 und unter Bezugnahme auf die Darstellung einer Weiche in Fig. 4. In den beigefügten Figuren, die teils bereits eingangs zur Erörterung des Standes der Technik diskutiert worden sind, zeigen:
- Fig. 1 a: und 1 b in einer Prinzipansicht einer in Richtung des Gleisverlaufes gesehenen Perspektive die prinzipielle Ausgestaltung des gespreizten Fahrgestells eines Messwagens nach dem Stand der Technik;
- Fig. 2: in einer Prinzipdarstellung das Fahrgestell aus Fig. 1 a bzw. 1 b in einer Perspektive in einer Aufsicht auf das Gleis von oben;
- Fig. 3: das Gestell gemäß dem Stand der Technik in einer Prinzipdarstellung gemäß einer Seitenansicht;
- Fig. 4: die Darstellung des Schienenverlaufes in einer Weiche zur Erläuterung der Funktion der Führungsschwerter;
- Fig. 5: eine Prinzipdarstellung entsprechend der Perspektive der Figuren 1 a und 1 b der Achse eines Fahrzeuges als Bestandteil der erfindungsgemäßen Messvorrichtung;
- Fig. 6: in gleicher Perspektive wie Fig. 5 eine Prinzipdarstellung der erfindungsgemäßen Messvorrichtung mit der Darstellung eines Halte- und Führungsabschnittes der Halte- und Führungseinrichtung der erfindungsgemäßen Messvorrichtung die Durchfahrt eines einfachen Gleisabschnittes;
- Fig. 7: in einer Prinzipdarstellung in gleicher Perspektive wie Fig. 6 das Verhalten der erfindungsgemäßen Messvorrichtung bei Durchfahrt einer Weiche;
- Fig. 8: in einer weiteren Prinzipdarstellung das Fahrgestell und die Halte- und Führungseinrichtung der erfindungsgemäßen Messvorrichtung in einer Aufsicht auf das Gleis von oben;
- Fig. 9: eine Prinzipdarstellung einer Seitenansicht der erfindungsgemäßen Messvorrichtung mit den wesentlichen Bestandteilen des Fahrgestells und der Halte- und Führungseinrichtung.

Das nachfolgend beschriebene Ausführungsbeispiel einer erfindungsgemäßen Messvorrichtung ist in den Figuren 5 bis 8 in verschiedenen, äußerst schematischen Darstellungen gezeigt. Die Darstellungen der genannten Figuren sind dabei weder maßstabsgerecht, noch etwa vollständige Konstruktionsanleitungen; sie dienen als Prinzipskizzen lediglich der Verdeutlichung des erfindungsgemäßen Prinzips, um dieses einem Fachmann näherzubringen. Der Fachmann wird anhand der nachfolgenden Beschreibung und unter Rückgriff auf diese Prinzipskizzen in der Lage sein, mit Hilfe ihm geläufiger Überlegungen entsprechende Konstruktionen zu erstellen und die Erfindung umzusetzen.

Zunächst wird auf die Fig. 5 Bezug genommen. Dort ist in einer schematischen Darstellung ein Fahrzeugrahmen 20 gezeigt, um zu verdeutlichen, dass in diesem die Räder 21, 22 einen festen Spurabstand aw aufweisen. Dieser Abstand aw ist geringfügig kleiner als der Abstand zwischen den im Gleis verlegten Schienen 3, 4, so dass der Wagen der erfindungsgemäßen Messvorrichtung während der Fahrt im Gleis seitliche Bewegungen ausführt, was durch den Doppelpfeil angedeutet ist, also im Gleis "schwimmt", wie dies mit üblichen schienengebundenen Wagen ebenfalls der Fall ist. Der Fahrzeugrahmen 20 ist nun mit einer Halte- und Führungseinrichtung verbunden, die in Seitenrichtung, also quer zu der Fahrtrichtung des Fahrzeuges, relativ zum Fahrzeugrahmen 20 bewegbar ist.

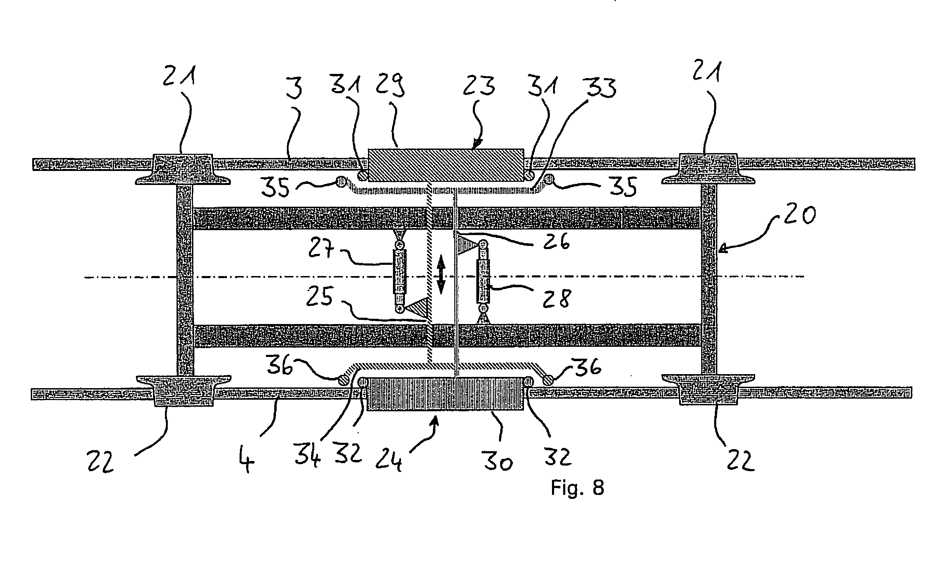

Die Halte- und Führungseinrichtung besteht aus zwei Halte- und Führungsabschnitten 23, 24 (vgl. Fig. 8). Jeder der Halte- und Führungsabschnitte 23 bzw. 24 weist ein Gestänge 25 bzw. 26 auf, mit welchem der von einem jeweiligen Aktuator 27 bzw. 28 an dem Fahrzeugrahmen 20 festgelegt ist. An dem Gestänge 25 bzw. 26 des jeweiligen Halte- und Führungsabschnittes 23 bzw. 24 ist einerseits ein jeweils zugeordneter Prüfkopfhalter 29 bzw. 30 angeordnet, der über die jeweils diesem zugeordnete Schiene des Gleises geführt ist. Der Prüfkopfhalter 29 des Halte- und Führungsabschnittes 23 ist dabei über die Schiene 3, der Prüfkopfhalter 30 des Halte- und Führungsabschnittes 24 über die Schiene 4 geführt.

Über die mit dem jeweiligen Gestänge 25 bzw. 26 des zugeordneten Halte- und Führungsabschnittes 23 und 24 verbundenen Aktuatoren 27 bzw. 28 werden diese Halte- und Führungsabschnitte 23 bzw. 24 jeweils nach außen und gegen die zugeordneten Schienen 3 bzw. 4 gedrückt. Für eine verbesserte Führung entlang der Schienen sind an den Prüfkopfhaltern 29 bzw. 30 Rollen 31 bzw. 32 angeordnet, die im Betrieb entlang der jeweiligen Schiene 3 bzw. 4 rollen und so für eine präzise und verschleißarme Führung der Prüfkopfhalter 29 bzw. 30 entlang der jeweiligen Schiene 3, 4 sorgen.

Während der Messfahrt, bleiben aufgrund der Möglichkeit der Relativbewegung der Halte- und Führungsabschnitte 23 bzw. 24 zu dem Fahrzeugrahmen 20 die Prüfkopfhalter 29 und 30 in sicherem Kontakt mit dem jeweils zugeordneten Schienen 3 bzw. 4, obwohl der Fahrzeugrahmen 20 innerhalb des Gleises quer zu den Schienen schwimmende Bewegungen ausführt. Diese Bewegungen werden durch die Aktuatoren 27 bzw. 28 kompensiert, was in der Fig. 8 durch den dazwischen angeordneten Doppelpfeil angedeutet ist.

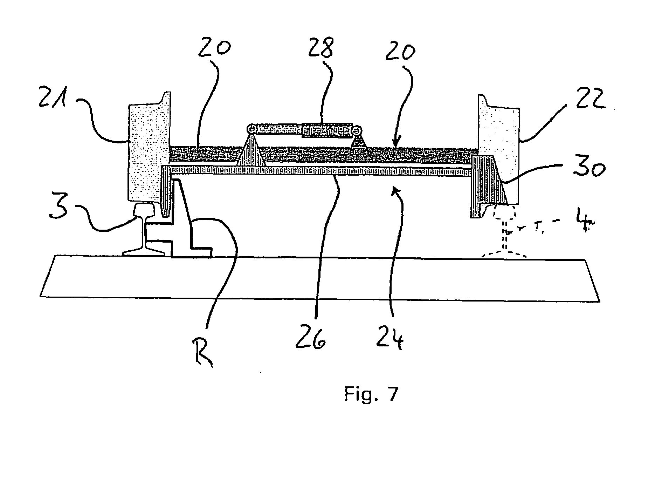

An den Gestängen 25 bzw. 26 der Halte- und Führungsabschnitte 23 bzw. 24 ist dem jeweils zugehörigen Prüfkopfhalter 29 bzw. 30 gegenüberliegend angeordnet ein Führungsschwert 33 bzw. 34 starr befestigt. Diese Führungsschwerter hintergreifen, wie dies schematisch in Fig. 7 dargestellt ist, bei einer Weichendurchfahrt den dort entlang laufenden Radlenker R im Bereich der außen liegenden Schiene und halten so ihren zugeordneten Halte- und Führungsabschnitt 23 bzw. 24 in dem führungslosen Abschnitt A der Weiche auf der inneren Schiene zurück und verhindern ein Auslaufen in den abzweigenden Schienenstrang und damit ein Verunfallen. Wegen der geringen Masse der gesamten Halte- und Führungseinrichtung bzw. der jeweiligen Halte- und Führungsabschnitt 23 bzw. der 24 können die zugeordneten Führungsschwerter 33 bzw. 34 vergleichsweise klein dimensioniert sein und insbesondere mit Rollen 35 bzw. 36 ausgestattet, die beim Auftreffen auf einen Radlenker R entlang desselben rollen und somit ein verschleißarmes Arbeiten des Führungsschwertes 33 bzw. 34 ermöglichen.

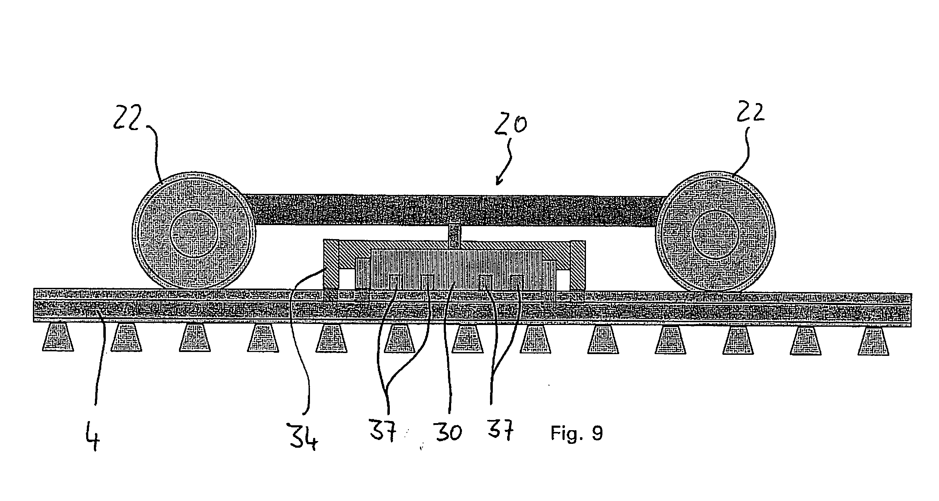

In Fig. 9 sind schließlich noch schematisch insgesamt vier in dem Prüfkopfhalter 30 angeordnete und festgelegte Prüfköpfe 37 zum Vermessen der Schiene 4 dargestellt. Bei diesen Prüfköpfen kann es sich sowohl um Ultraschallprüfköpfe handeln, die gleitend auf einem Wasserfilm in Kontakt mit der Schiene geführt werden oder aber um Wirbelstromprüfköpfe, die in einem vorgegebenen und konstanten Abstand oberhalb der zu vermessenden Schienenoberfläche geführt sind.

Aus der voranstehenden Beschreibung des Ausführungsbeispiels sind die Vorzüge der erfindungsgemäßen Messvorrichtung noch einmal deutlich geworden. Es ist klar ersichtlich, dass das als Fahrzeugrahmen 20 des zu der Messvorrichtung gehörenden Fahrzeuges ein üblicher, einen starren Radabstand, also eine feste Spurweite, aufweisender Fahrzeugrahmen verwendet werden kann, so dass das zugehörige Fahrzeug, das auch als Trägerfahrzeug bezeichnet werden kann, vergleichsweise kostengünstig aufgebaut werden kann. Für den Aufbau der Messvorrichtung muss daran lediglich der speziell für den Einsatzzweck der Vermessung der Schienen gefertigte und ausgelegte Zusatz in Form der Halte- und Führungseinrichtung mit den beiden Halte- und Führungsabschnitten 23, 24 festgelegt werden, und es sind die zugehörigen Versorgungs- und Elektronikeinrichtungen auf dem Trägerfahrzeug einzurichten.

### Bezugszeichenliste

- 1: Fahrgestellteil
- 2: Fahrgestellteil
- 3: Schiene
- 4: Schiene
- 5: Rad
- 6: Rad
- 7: Aktuator
- 8: Prüfkopfhalter
- 9: Prüfkopfhalter
- 10: Prüfkopf
- 11: Führungsschwert
- 12: Führungsschwert
- 20: Fahrzeugrahmen
- 21: Rad
- 22: Rad
- 23: Halte- und Führungsabschnitt
- 24: Halte- und Führungsabschnitt
- 25: Gestänge
- 26: Gestänge
- 27: Aktuator
- 28: Aktuator
- 29: Prüfkopfhalter
- 30: Prüfkopfhalter
- 31: Rolle
- 32: Rolle
- 33: Führungsschwert
- 34: Führungsschwert
- 35: Rolle
- 36: Rolle
- 37: Prüfkopf

- A: Abschnitt
- aR: Radabstand
- aS: Schwertabstand
- aW: Spurabstand
- R: Radlenker
- W: Weiche

## Patentansprüche

1. Messvorrichtung zur Materialprüfung verlegter Schienen (3, 4) im Gleis mit einem gezogenen oder selbstangetriebenen, einen Fahrzeugrahmen (20) und Schienenlaufräder (21, 22) aufweisenden Fahrzeug und einer Prüfkopfanordnung mit wenigstens je einem entlang der jeweiligen Schiene (3, 4) zu führenden Prüfkopf (37) für jede der beiden in dem Gleis verlegten Schienen (3, 4), wobei die Schienenlaufräder (21, 22) des Fahrzeuges einen festen Spurabstand (aw) aufweisen, wobei an dem Fahrzeugrahmen (20) eine Halte- und Führungseinrichtung für die Prüfkopfanordnung festgelegt ist, die quer zu der Fahrtrichtung des Fahrzeuges relativ zu dem Fahrzeugrahmen (20) bewegbar ist, wobei die Halte- und Führungseinrichtung einen ersten und einen zweiten Halte- und Führungsabschnitt (23, 24) aufweist, die mittels einer Spreizeinrichtung (27, 28) quer zu der Fahrtrichtung des Fahrzeuges mit einer Spreizkraft beaufschlagt sind und jeweils wenigstens einen Prüfkopf (37) tragen, den sie entlang jeweils einer der beiden Schienen (3, 4) in dem Gleis führen, **dadurch gekennzeichnet, dass** die Halte- und Führungseinrichtung an den Halte- und Führungsabschnitten (23, 24) Führungsrollen (31, 32) aufweist, die im Betrieb an der Schiene (3, 4) entlang rollen, entlang derer der wenigstens eine an dieser Halte- und Führungseinrichtung (23, 24) festgelegte Prüfkopf (37) geführt ist.

2. Messvorrichtung nach Anspruch 1, **dadurch gekennzeichnet, dass** an den Halte- und Führungsabschnitten (23, 24) jeweils wenigstens ein Führungsschwert (33, 34) festgelegt ist, welches bis in den Bereich der dem an dem jeweiligen Halte- und Führungsabschnitt (23, 24) angeordneten wenigstens einen Prüfkopf (37) gegenüberliegenden Schiene (3, 4) ragt und eingerichtet ist, in Weichenbereichen der Gleisstrecke dort angeordnete Radlenker (R) zu hintergreifen.

3. Messvorrichtung nach Anspruch 2, **dadurch gekennzeichnet, dass** die Führungsschwerter (33, 34) in einem Bereich, in welchem sie in einer Weiche (W) an dem Radlenker (R) angreifen, Rollen (35, 36) zum Abrollen auf dem Radlenker (R) aufweisen.

4. Messvorrichtung nach einem der vorhergehenden Ansprüche, **dadurch gekennzeichnet, dass** die Halte- und Führungseinrichtung mit der daran angeordneten Prüfkopfanordnung ein Gewicht von maximal 50 kg aufweist.

5. Messvorrichtung nach einem der vorhergehenden Ansprüche, **gekennzeichnet durch** einen zwischen dem Fahrzeugrahmen (20) und der Halte- und Führungseinrichtung angeordneten Aktuator, der eine Andruckkraft auf die Halte- und Führungseinrichtung in Richtung des Gleises ausübt.

6. Messvorrichtung nach einem der vorhergehenden Ansprüche, **dadurch gekennzeichnet, dass** die Spreizeinrichtung (27, 28) wenigstens zwei jeweils zwischen dem Fahrzeugrahmen und dem ersten bzw. dem zweiten Halte - und Führungsabschnitt (23, 24) angeordnete Aktuatoren aufweist, die eine auf die Schiene (3, 4), entlang derer die Prüfköpfe (37) des jeweiligen Halte - und Führungsabschnittes (23, 24) geführt werden, hin gerichtete Kraft auf den zugeordneten Halte- und Führungsabschnitt (23, 24) ausüben.

7. Messvorrichtung nach einem der vorhergehenden Ansprüche, **dadurch gekennzeichnet, dass** die Prüfköpfe (37) Ultraschallprüfköpfe sind.

8. Messvorrichtung nach einem der Ansprüche 1 bis 7, **dadurch gekennzeichnet, dass** die Prüfkopfe (37) Wirbelstromprüfköpfe sind.

9. Messvorrichtung nach einem der vorhergehenden Ansprüche, **dadurch gekennzeichnet, dass** sie ferner eine Auswerteelektronik zum Auswerten der Messsignale der Prüfköpfe (37) aufweist, an die die Prüfköpfe (37) mit Signalleitungen angeschlossen sind.

10. Messvorrichtung nach einem der vorhergehenden Ansprüche, **dadurch gekennzeichnet, dass** das Fahrzeug ein schienfahrtaugliches Standardfahrzeug ist.

## Claims

1. A measuring device for material testing of laid rails (3, 4), in the track with a tracted or self-propelled vehicle containing a vehicle chassis (20) and rail running wheels (21, 22) and a test head assembly having each at least one test head (37) to be run along the respective rail (3, 4) for each of both rails (3, 4) laid in the track, whereas the rail running wheels (21, 22) of the vehicle exhibit a fixed track pitch (aw), whereas a retaining and guiding device for the test head assembly is fixed on the vehicle chassis (20), a device which can be moved crosswise to the driving direction of the vehicle with respect to the vehicle chassis (20), whereas the retaining and guiding device exhibits a first and a second retaining and guiding sections (23, 24), which are subjected to spreading force crosswise to the driving direction of the vehicle by means of a spreading device (27, 28) and respectively carry at least one test head (37), which they guide along one of both rails (3, 4) in the track respectively, **characterised in** whereas the retaining and guiding device exhibits guiding rollers (31, 32) on the retaining and guiding sections (23, 24), which in operation roll along the rail (3, 4), along which said at least one test head (37) fixed to said retaining and guiding device (23, 24) is guided.

2. The measuring device according to claim 1, **characterised in that** respectively at least one guide blade (33, 34) is fixed to the retaining and guiding sections (23, 24), which protrudes into the area of the rail (3, 4) opposite at least one test head (37) on the respective retaining and guiding section (23, 24), to grip in check rails (R) arranged there in track switches of the track section.

3. The measuring device according to claim 2, **characterised in that** the guide blades (33, 34) exhibit rollers (35, 36) for rolling down on the check rail (R), in a region in which said blades grip into a junction (W) on the check rail (R).

4. A measuring device according to one of the preceding claims, **characterised in that** the retaining and guiding device with the test head assembly provided thereon has a maximum weight of 50 kg.

5. A measuring device according to one of the preceding claims, **characterised by** an actuator arranged between the vehicle chassis (20) and the retaining and guiding device, which exerts a pressing force on the retaining and guiding device in the direction of the track.

6. A measuring device according to one of the preceding claims, **characterised in that** the spreading device (27, 28) contains at least two actuators between the vehicle chassis and the first or the second retaining and guiding section (23, 24), which exert a force directed to the track (3, 4), along which the test heads (37) of the respective retaining and guiding section (23, 24) are run, which force is applied to the associated retaining and guiding section (23, 24).

7. A measuring device according to one of the preceding claims, **characterised in that** the test heads (37) are ultrasound test heads.

8. A measuring device according to any of the claims 1 to 7, **characterised in that** that the test heads (37) are eddy current test heads.

9. A measuring device according to one of the preceding claims, **characterised in that** it further contains a interpretation electronic circuit for interpreting the measuring signals of the test heads (37), a circuit to which the test heads (37) are connected with signal lines.

10. A measuring device according to one of the preceding claims, **characterised in that** the vehicle is a standard vehicle which can slide on rails.

## Revendications

1. Dispositif de mesure pour le contrôle matériel de rails posés (3, 4) sur la voie, comprenant un véhicule tracté ou automoteur, présentant un châssis de véhicle (20) et des roues ferroviaires (21, 22), et un ensemble tête de contrôle présentant au moins une tête de contrôle (37) que l'on guidera le long du rail respectif (3, 4) pour chacun des deux rails (3, 4) posés sur la voie, dans lequel les roues ferroviaires (21, 22) du véhicule présentent un entraxe fixe (aw), dans lequel un dispositif de retenue et de guidage est fixé pour l'ensemble test de contrôle au niveau du châssis de véhicle (20), dispositif mobile perpendiculairement au sens de déplacement du véhicule par rapport au châssis de véhicle (20), dans lequel le dispositif de retenue et de guidage présente un premier tronçon de retenue et de guidage et un second tronçon de retenue et de guidage (23, 24), qui sont soumis à une force d'écartement au moyen d'un dispositif d'écartement (27, 28) perpendiculairement au sens de déplacement du véhicule et portent respectivement au moins une tête de contrôle (37), qu'ils guident respectivement le long d'une des deux voies (3, 4) sur la voie, **caractérisé en ce que** le dispositif de retenue et de guidage présente des galets de guidage (31, 32) au niveau des tronçons de retenue et de guidage (23, 24), galets se déplaçant, en service, le long du rail (3, 4), le long duquel ladite au moins une tête de contrôle (37) fixée au niveau dudit dispositif de retenue et de guidage est guidée.

2. Dispositif de mesure selon la revendication 1, **caractérisé en ce qu'**au moins une lame de guidage (33, 34) respectivement est fixée au niveau des tronçons de retenue et de guidage (23, 24), qui pénètre dans la zone du rail (3, 4) opposé à au moins une tête de contrôle (37) et disposé au niveau du tronçon de retenue et de guidage (23, 24) respectif et qui est configuré pour engrener des contre-rails (R) prévus à cet endroit, dans des zones d'aiguillage du tronçon de rail.

3. Dispositif de mesure selon la revendication 2, **caractérisé en ce que** les lames de guidage (33, 34) présentent des galets (35, 36) pour rouler sur le contre-rail (R) dans une zone dans laquelle les lames engrènent dans un aiguillage (W) au niveau du contre-rail (R).

4. Dispositif de mesure selon l'une des revendications précédentes, **caractérisé en ce que** le dispositif de retenue et de guidage avec l'ensemble test de contrôle disposé au niveau de celui-ci a un poids maximal de 50 kg.

5. Dispositif de mesure selon l'une des revendications précédentes, **caractérisé par** un actionneur disposé entre le châssis de véhicle (20) et le dispositif de retenue et de guidage, qui exerce une force de pression sur le dispositif de retenue et de guidage dans le sens de la voie.

6. Dispositif de mesure selon l'une des revendications précédentes, **caractérisé en ce que** le dispositif d'écartement (27, 28) présente au moins deux actionneurs disposés respectivement entre le châssis de véhicle et le premier ou le second tronçon de retenue et de guidage (23, 24), qui exercent sur le rail (3, 4), le long duquel les têtes de contrôle (37) du tronçon de retenue et de guidage respectif (23, 24) sont guidées, une force dirigée vers le tronçon de retenue et de guidage correspondant (23, 24).

7. Dispositif de mesure selon l'une des revendications précédentes, **caractérisé en ce que** les têtes de contrôle (37) sont des têtes de contrôle à ultrasons.

8. Dispositif de mesure selon l'une des revendications 1 à 7, **caractérisée en ce que** les têtes de contrôle (37) sont des têtes de contrôle à courant de Foucault.

9. Dispositif de mesure selon l'une des revendications précédentes, **caractérisé en ce qu'**il présente de plus un circuit électronique d'interprétation pour interpréter les signaux de mesure des têtes de contrôle (37), auquel les têtes de contrôle (37) sont connectées avec des lignes de signaux.

10. Dispositif de mesure selon l'une des revendications précédentes, **caractérisé en ce que** le véhicule est un véhicule standard apte à rouler sur des rails.
